# EUROPÄISCHE PATENTSCHRIFT

(11) **EP 0 594 103 B1**
(45) Veröffentlichungstag und Bekanntmachung des Hinweises auf die Patenterteilung: **03.04.1996**
(21) Anmeldenummer: 93116787.8
(22) Anmeldetag: 18.10.1993
(51) Int. Cl.: B23D 37/10

(54) **Innenräummaschine, insbesondere Senkrecht-Innenräummaschine**
Broaching machine for inner surfaces, especially vertical broaching machine
Machine de brochage interne, spécialement machine de brochage verticale

(30) Priorität: 19.10.1992 DE 4235145
(43) Veröffentlichungstag der Anmeldung: 27.04.1994
(73) Patentinhaber: Oswald Forst Maschinenfabrik und Apparatebauanstalt GmbH & Co Kommanditgesellschaft, D-42659 Solingen (DE)
(72) Erfinder: Dötsch, Rudolf, D-42609 Solingen (DE)
(74) Vertreter: Rau, Manfred, Dr. Dipl.-Ing.

(56) Entgegenhaltungen:
- DE-B- 1 292 994
- US-A- 1 532 107
- US-A- 1 823 975

## Beschreibung

Die Erfindung bezieht sich auf eine Innenräummaschine nach dem Oberbegriff des Anspruches 1.

Aus der EP-A-0 269 069 ist eine derartige Innenräummaschine bekannt, die zum Druckräumen und zum Ziehräumen geeignet ist. Sie weist einen Rahmen auf, der aus einem oberen Druckschlitten und einem unterhalb eines Maschinentisches angeordneten Ziehschlitten gebildet wird, wobei die beiden Schlitten mittels Verbindungsstangen miteinander zu dem erwähnten Rahmen verbindbar sind. Diese Verbindungsstangen sind mit dem unteren Ziehschlitten verbunden. Mit dem oberen Druckschlitten sind sie mittels durch Klemmung wirkender Feststeller verriegelbar. Diese durch Klemmung wirkenden Feststeller gewährleisten eine verschiebefeste Verriegelung der Verbindungsstangen mit dem Druckschlitten. Am Maschinentisch sind hydraulisch beaufschlagbare Kolben-Zylinder-Antriebe als Räum-Hauptantriebe angebracht, deren Kolbenstangen am Ziehschlitten angreifen. Am Ziehschlitten und am Druckschlitten sind Werkzeughalter zur Aufnahme eines Räumwerkzeuges angebracht. An einer oberhalb des Druckschlittens ortsfest angeordneten Kopfplatte des Maschinengestells ist ein als hydraulisch beaufschlagbarer Kolben-Zylinder-Antrieb ausgebildeter Hilfsantrieb angebracht, dessen Kolbenstange über einen Mitnehmer mit einer Verstellstange verbunden ist, die bei Betätigung des Hilfsantriebes parallel zu den Verbindungsstangen bzw. Führungssäulen des Gestells verschoben wird. Sie kann mittels eines Klemm-Feststellers mit dem Druckschlitten verbunden werden. Vor Räumbeginn, d.h. zum Einsetzen eines neuen Räumwerkzeuges oder zum Einlegen eines Werkstückes auf den Maschinentisch, wird der Rahmen auseinandergefahren. Hierzu werden die die Verbindungsstangen mit dem Druckschlitten verbindenden Klemm-Feststeller geöffnet, der Klemm-Feststeller an der Verstellstange festgeklemmt und diese Stange mittels des Hilfsantriebes nach oben verfahren. Dadurch wird entweder das im Werkzeughalter am Druckschlitten gehaltene Räumwerkzeug soweit nach oben verfahren, daß ein neues Werkstück auf den Maschinentisch gelegt oder ein neues Räumwerkzeug eingesetzt werden kann. Anschließend wird der Hilfsantrieb in umgekehrter Richtung verfahren, d.h. der Druckschlitten wird bei ansonsten feststehendem Ziehschlitten nach unten verschoben, bis der untere Schaft des Räumwerkzeuges in den Werkzeughalter am Ziehschlitten eingeführt ist. Anschließend wird der Klemm-Feststeller zwischen der Verstellstange und dem Druckschlitten gelöst, und es werden die Verbindungsstangen mittels der Klemm-Feststeller mit dem Druckschlitten verriegelt. Anschließend werden die Räum-Hauptantriebe ausgefahren, so daß der Ziehschlitten nach unten verfahren wird. Er nimmt hierbei über die Verbindungsstangen den Druckschlitten mit. Wenn ein Ziehräumvorgang durchgeführt wird, dann werden die Räumkräfte, da das Räumwerkzeug in den Werkzeughaltern eingespannt ist, zum einen direkt vom Ziehschlitten auf das Räumwerkzeug und zum anderen vom Druckschlitten auf das Räumwerkzeug übertragen. Die Verbindungsstangen sind hierbei Zugkräften ausgesetzt, die über die Klemm-Feststeller auf den Druckschlitten übertragen werden müssen. Dies führt zu Problemen, da die lediglich kraftschlüssig wirkenden Klemm-Feststeller die Räumkräfte übertragen müssen. Es können hierbei Spiel- bzw. Toleranzprobleme auftreten, die zu Werkzeugbeschädigungen führen können Des weiteren ist das Öffnen und Schließen des Rahmens umständlich. Da der Rahmen stets auf Zug beansprucht wird, muß er auch außerordentlich schwer ausgeführt werden.

Der Erfindung liegt die Aufgabe zugrunde, eine Innenräummaschine zu schaffen, die als Zieh-Räummaschine und als Druck-Räummaschine einsetzbar und besonders einfach aufgebaut und handhabbar ist.

Diese Aufgabe wird erfindungsgemäß durch die Merkmale im Kennzeichnungsteil des Anspruches 1 gelöst. Durch die erfindungsgemäße Ausgestaltung wird erreicht, daß der Rahmen beim Druckräumen kräftefrei ist, da der Druckschlitten vom Räum-Hauptantrieb direkt beaufschlagt wird und da die Werkzeughalter zum Halten eines Räumwerkzeuges wechselweise verriegelbar und entriegelbar sind, d.h. beim Ziehräumen ist das Räumwerkzeug nur mit dem am Ziehschlitten angebrachten Werkzeughalter verriegelt, während beim Druckräumen das Räumwerkzeug nur mit dem am Druckschlitten angebrachten Werkzeughalter verriegelt ist. Beim Ziehräumen ist der gesamte rahmenartige Räumschlitten und zwar insbesondere die Verbindungsstangen nur mit Druckkräften beaufschlagt. Da die Verbindungsstangen hierbei gegen Anschläge am Druck-Schlitten anliegen, tritt auf einfache Weise ein Formschluß ein, der Toleranzprobleme ausschließt. Die Hilfsantriebe sind in den Räumschlitten integriert und werden mit diesem verfahren. Sie dienen zum Absenken des Zieh-Schlittens zum Werkstückwechsel oder zum Räumwerkzeugwechsel; sie wirken direkt zwischen den Verbindungsstangen und dem Druck-Schlitten, so daß keine gesonderten Feststelleinrichtungen oder dergleichen notwendig sind.

Zahlreiche weitere Merkmale, Vorteile und Einzelheiten der Erfindung ergeben sich aus den Unteransprüchen und der nachfolgenden Beschreibung eines Ausführungsbeispieles anhand der Zeichnung. Es zeigt
- Fig. 1: eine Innenräummaschine für Druckräumen und Ziehräumen in ihrer Ausgangsstellung in einer vertikalen Darstellung,
- Fig. 2: die Innenräummaschine in einer Arbeitsstellung für Zieh-Räumen und
- Fig. 3: die Innenräummaschine in einer Arbeitsstellung für Druck-Räumen.

Die in der Zeichnung dargestellte Räummaschine ist als Senkrecht-Innen-Räummaschine ausgebildet. Sie weist einen Maschinenkörper 1 auf, der in seinem unteren Bereich als Untergestell 2 ausgebildet ist, das auf einem Boden-Fundament 3 abgestützt ist. Der Maschinenkörper 1 weist in seinem oberen Bereich, d.h. im mittleren Bereich der Maschine einen Maschinentisch 4 auf. Vom Maschinenkörper 1 erstrecken sich seitliche Stützsäulen 5 senkrecht nach oben, die an ihrem oberen Ende mit einer Kopfplatte 6 verbunden sind. Durch den Maschinentisch 4, die Stützsäulen 5 und die Kopfplatte 6 wird ein sehr stabiles rahmenartiges Maschinengestell 7 gebildet. An der Kopfplatte 6 einerseits und dem Untergestell 2 andererseits sind zwei zueinander parallele Schlitten-Führungssäulen 8 angebracht, auf denen unterhalb des Maschinentisches 4 ein Zieh-Schlitten 9 und zwischen Maschinentisch 4 und Kopfplatte 6 ein oberer Druck-Schlitten 10 verschiebbar geführt angeordnet sind.

Auf der Oberseite der Kopfplatte 6, also auf der Außenseite des Rahmens 7, ist ein hydraulisch beaufschlagbarer Kolben-Zylinder-Antrieb angebracht, bei dem es sich um den Hauptantrieb 11 handelt und der notwendigerweise ein Linearantrieb ist. Der Zylinder 12 dieses Antriebes 11 ist an der Kopfplatte 6 angebracht, während das äußere Ende seiner Kolbenstange 13 mit dem oberen Druck-Schlitten 10 verbunden ist. Der Kolben-Zylinder-Antrieb 11 ist als Differential-Antrieb ausgebildet, d.h. die Kolbenstange 13 weist einen geringeren Querschnitt auf als dem Innendurchmesser des Zylinders 12 entspricht. Sie ist an ihrem inneren Ende mit einem abgedichtet an der Innenwand des Zylinders 12 geführten Kolben 14 versehen. Der in der Zeichnung oben dargestellte Zylinder-Innenraum 15 weist einen freien Querschnitt auf, der dem Innenquerschnitt des Zylinders 12 entspricht. Der von der Kolbenstange 13 durchsetzte Kleinere Zylinderinnenraum 16 weist nur einen freien Querschnitt auf, der der Differenz von freiem Querschnitt des Zylinders 12 abzüglich dem Querschnitt der Kolbenstange 13 entspricht. Beide Innenräume 15, 16 sind über Druck-Anschlüsse 17, 18 jeweils an eine nicht dargestellte hydraulische Druckversorgung angeschlossen.

Auf dem oberen Schlitten, also dem Druck-Schlitten 10 sind zwei als Hilfsantriebe 19 dienende ebenfalls hydraulisch beaufschlagbare Kolben-Zylinder-Antriebe montiert, bei denen es sich also auch notwendigerweise um Linearantriebe handelt. Ihre Zylinder 20 sind an der Oberseite des Druck-Schlittens 10 angebracht und ragen in der oberen Stellung des Druck-Schlittens 10 durch Ausnehmungen 19a in der Kopfplatte 6 nach oben; ihre Kolbenstangen 21 durchdringen entsprechende Bohrungen 22 des Druck-Schlittens 10. Sie sind an ihren freien Enden mit Verbindungsstangen 23 versehen, die wiederum Ausnehmungen 24 im Maschinentisch 4 durchsetzen und mit ihren unteren freien Enden mit dem unteren Zieh-Schlitten 9 verbunden sind. Die Schlitten-Führungssäulen 8, der Antrieb 11, die Hilfsantriebe 19 und die Verbindungsstangen 23 befinden sich in einer gemeinsamen Ebene, die durch die Zeichnungsebene bestimmt ist, und verlaufen alle parallel zueinander, nämlich zur Räumrichtung 25.

Die Hilfsantriebe 19 sind - gleichermaßen wie der Antrieb 11 - als doppelseitig beaufschlagbare Kolben-Zylinder-Antriebe ausgebildet, d.h. sie weisen im Bereich des in der Zeichnung oberen freien Endes des Zylinders 20 einen Druckanschluß 26 und im Bereich des Kolbenstangenaustritts einen weiteren Druckanschluß 27 auf. Die Druckanschlüsse 26, 27 sind ebenfalls an eine gemeinsame in der Zeichnung nicht dargestellte Druckquelle angeschlossen. Der am inneren Ende der Kolbenstange 21 angebrachte Kolben 28 ist also wechselweise von beiden Seiten mit Druckflüssigkeit beaufschlagbar. An der Unterseite des oberen Druck-Schlittens 10, also auf der den Verbindungsstangen 23 zugewandten Seite sind Anschläge 29 für die zugewandten Stirnseiten 30 der jeweiligen Verbindungsstange 23 ausgebildet. Diese Anschläge 29 sind als Anschlagbuchsen 31 ausgebildet, die in entsprechenden Gewindebohrungen 32 des Druck-Schlittens 10 verstellbar sind, wodurch die Lage der Anschläge 29 jeweils sehr exakt und fein eingestellt werden kann.

Auf der dem Druck-Schlitten 10 zugewandten Oberseite des Maschinentisches 4 ist eine Werkstückauflage 33 angebracht, auf der ein zu räumendes Werkstück 34 abgestützt und zentriert gehalten werden kann. Derartige Werkstückauflagen 33 sind allgemein bekannt.

Auf der der Werkstückauflage 33 zugewandten Oberseite des Zieh-Schlittens 9 ist auf diesem ein unterer Werkzeughalter 35 befestigt, der eine Schaftaufnahme 36 zur Aufnahme eines Schaftes 37 eines Räumwerkzeuges 38 aufweist. Der Werkzeughalter 35 ist weiterhin mit quer zur Räumrichtung 25 verschiebbaren Verriegelungsbolzen 39 versehen, die in einen gegenüber dem Schaft 37 verjüngten Schafthals 40 des Räumwerkzeuges 38 eingreifen können, wodurch letzteres mit dem Werkzeughalter 35 verriegelt wird. Umgekehrt kann durch Auseinanderfahren der Verriegelungsbolzen 39 das Räumwerkzeug 38 vom Werkzeughalter 35 gelöst werden. An den Schafthals 40 schließt sich ein Schaftkopf 41 an.

Das Räumwerkzeug 38 weist im Anschluß an den Schaft 37 nach oben einen mit Räumzähnen versehenen Räumteil 42 auf, an den sich ein Endstück 43 mit einem Endstückhals 44 und einem Endstückkopf 45 anschließt. An der dem Räumwerkzeug 38 und der Werkstückauflage 33 zugewandten unteren Seite des Druck-Schlittens 10 ist ein oberer Werkzeughalter 46 angebracht, der eine Endstück-Aufnahme 47 für das Endstück 43 und Verriegelungsbolzen 48 aufweist, die quer zur Räumrichtung 25 in den Endstückhals 44 verriegelnd eingefahren oder entriegelnd aus diesem herausgefahren werden können. Außerdem ist ein Drucklager 49 vorgesehen, gegen das sich der Endstückkopf 45 abstützen kann. Die Ausgestaltung des Schaftes 37 und des Endstückes 43 und des Werkzeughalters 35 und des Werkzeughalters 46 - mit Ausnahme des Drucklagers 49 - sind allgemein bekannt und weitgehend durch DIN festgelegt.

Auch das Räumwerkzeug 38 befindet sich in der geschilderten durch die Zeichnungsebene festgelegten Hauptebene der Maschine, und zwar symmetrisch zwischen den Stützsäulen 5 bzw. den Verbindungsstangen 23.

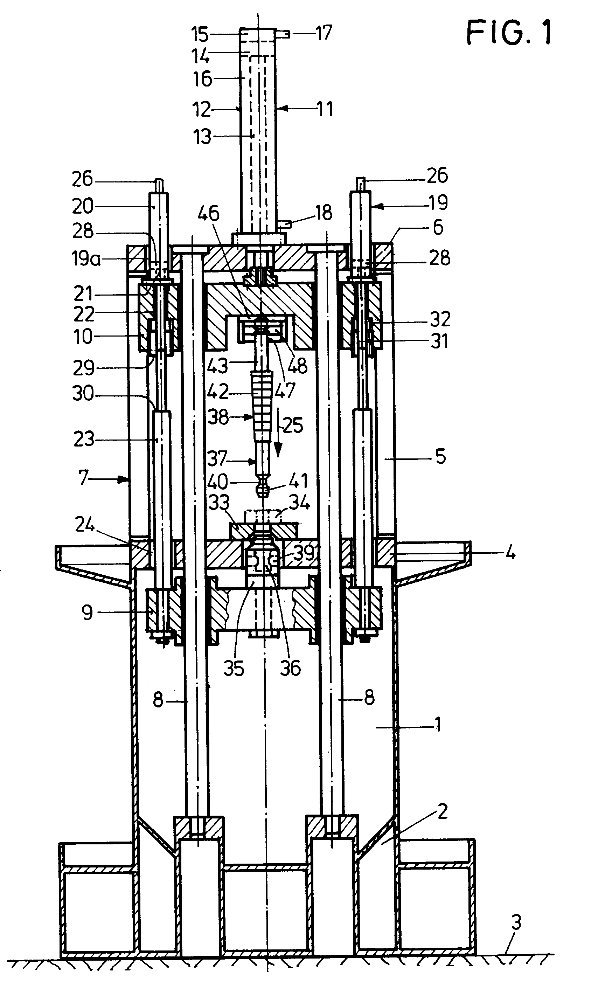

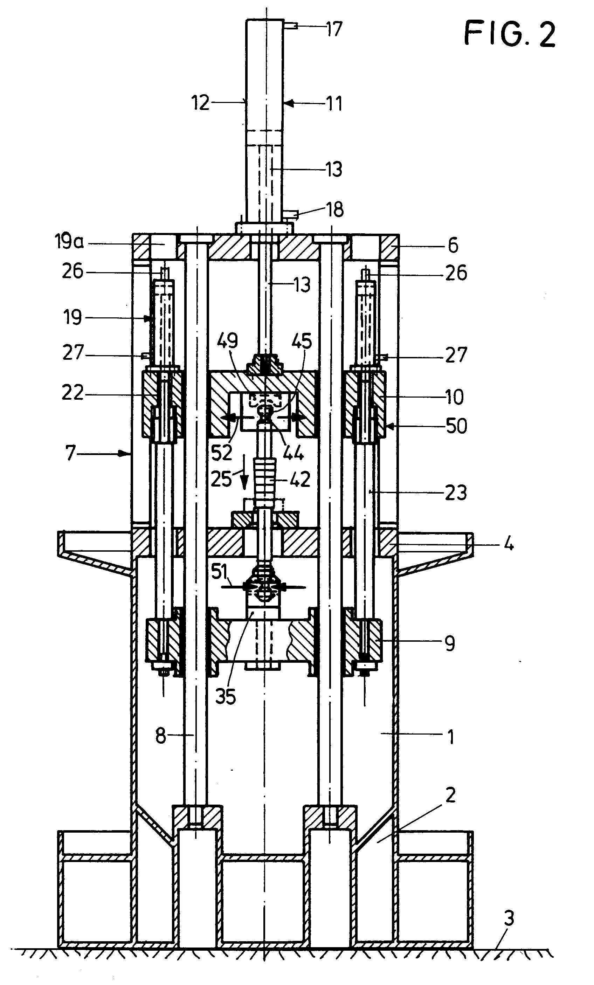

Zum in Fig. 2 dargestellten Zieh-Räumen wird der Hauptantrieb 11 über seinen oberen Druck-Anschluß 17 mit Druckflüssigkeit beaufschlagt. Hierdurch wird der Druck-Schlitten 10 aus der in Fig. 1 dargestellten oberen Lage, in der das Räumwerkzeug 38 im oberen Werkzeughalter 46 gehalten ist und in der sich der Schaftkopf 41 oberhalb des Werkstücks 34 befindet, nach unten verfahren. Gleichzeitig werden die Hilfsantriebe 19 über ihre Druck-Anschlüsse 27 mit Druckflüssigkeit beaufschlagt, so daß die jeweilige Kolbenstange 21 in den jeweiligen Zylinder 20 eingefahren wird, bis die jeweilige Verbindungsstange 23 mit ihrer Stirnseite 30 gegen den entsprechenden Anschlag 29 am Druck-Schlitten 10 anliegt. Der durch den Zieh-Schlitten 9, den Druck-Schlitten 10, die Verbindungsstangen 23 und die Hilfsantriebe 19 gebildete auffahrbare bzw. schließbare Räumschlitten 50 wird also geschlossen. Hierdurch gelangt der Schaft 37 in den Werkzeughalter 35 und wird dort verriegelt, was durch die die Verriegelungsrichtung 51 der Verriegelungsbolzen 39 andeutenden Pfeile in Fig. 2 angedeutet ist. Die Verriegelungsbolzen 48 sind geöffnet, was durch die die Entriegelungsrichtung 52 dieser Verriegelungsbolzen 48 andeutenden Pfeile in Fig. 2 sichtbar gemacht ist. Der untere Werkzeughalter 35 ist also geschlossen, während der obere Werkzeughalter 46 geöffnet ist. Beide Werkzeughalter 35, 46 werden über ein nicht dargestelltes gemeinsames Steuerventil angesteuert, so daß sie zwangsweise gegensinnig bzw. wechselseitig arbeiten. Wie Fig. 2 entnehmbar ist, liegt der Endstückkopf 45 nicht gegen das Drucklager 49 an, so daß von dort keine Druckkräfte übertragen werden. Durch Druckbeaufschlagung des Hauptantriebes 11 über den Druck-Anschluß 17 wird die Kolbenstange 13 aus dem Zylinder 12 ausgefahren, wodurch die hierbei auf den Räumschlitten 50 ausgeübte Druckkraft über den oberen Druck-Schlitten 10 und die Verbindungsstange 23 als Druckkraft auf den unteren Zieh-Schlitten 9 übertragen wird, von wo sie als Zugkraft auf das Räumwerkzeug 38 weiterübertragen wird, dessen verzahnter Räumteil 42 durch das zu räumende Werkstück 34 gezogen wird, wie es in Fig. 2 dargestellt ist. Die beiden Hilfsantriebe 19 werden hierbei unter Hydraulikdruck gehalten, und zwar auf ihre unteren Druckanschlüsse 27. Die Hilfsantriebe 19 selbst werden von der Räumkraft nicht beaufschlagt, da diese - wie erläutert - direkt als Druckkraft vom Druck-Schlitten 10 auf die Verbindungsstangen 23 übertragen wird.

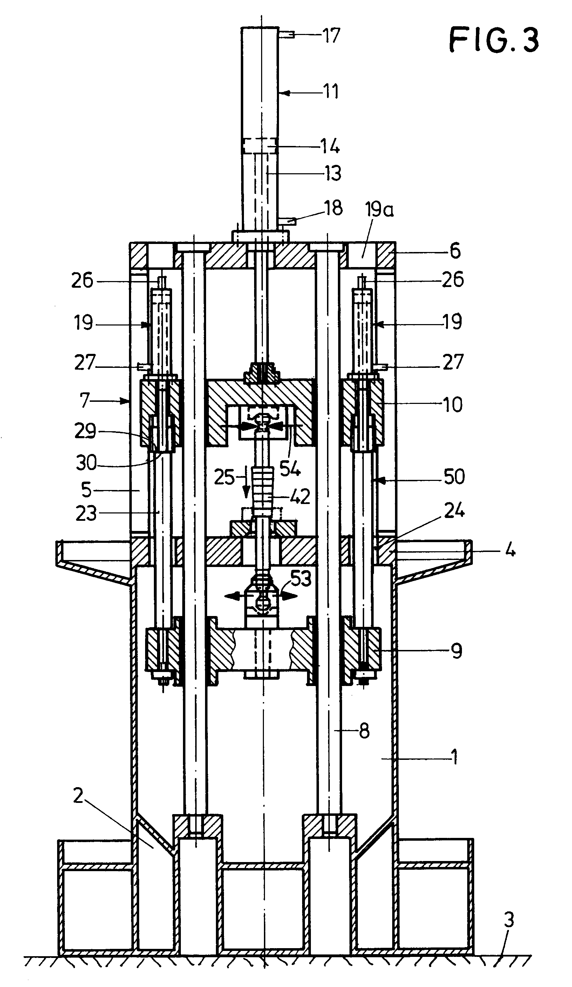

Nach Beendigung des Räumhubes in der nach unten gerichteten Räumrichtung 25 werden die oberen Druck-Anschlüsse 26 der Hilfsantriebe 19 mit Druck beaufschlagt, die Kolbenstangen 21 also ausgefahren. Hierdurch wird der untere Zieh-Schlitten 9 weiter nach unten verfahren, so daß auch das Endstück 43 des Räumwerkzeuges 38 durch das Werkstück 34 nach unten hindurchgefahren wird. Das Werkstück 34 kann dann aus der Werkstückauflage 33 entnommen werden. Anschließend werden die Hilfsantriebe 19 wieder über ihre unteren Druck-Anschlüsse 27 mit Druckmedium beaufschlagt, so daß der Räumschlitten 50 zusammengefahren wird. Das Endstück 43 des Räumwerkzeuges 38 gelangt wieder in den oberen Werkzeughalter 46. Durch Beaufschlagung des unteren Druck-Anschlusses 18 des Zylinders 12 des Hauptantriebes 11 wird der geschlossene Räumschlitten 50 nach oben in die in Fig. 1 dargestellte Ausgangsstellung verfahren. Spätestens wenn der Zieh-Schlitten 9 die Unterseite des Maschinentisches 4 erreicht hat, werden die Verriegelungsbolzen 39, 48 der Werkzeughalter 35, 46 derart angesteuert, daß der obere Werkzeughalter 46 geschlossen und der untere Werkzeughalter 35 geöffnet wird. Dies ist durch die Entriegelungsrichtung 53 der Verriegelungsbolzen 39 und die Verriegelungsrichtung 54 der Verriegelungsbolzen 48 jeweils in Fig. 3 in einem an sich anderem Zusammenhang dargestellt. Der Hauptantrieb 11 bewegt nun den oberen Druck-Schlitten 10 wieder in die obere - in Fig. 1 dargestellte - Ausgangsstellung, während durch entsprechende Beaufschlagung der Hilfsantriebe 19 über ihre Druck-Anschlüsse 26 der rahmenartige Räumschlitten 50 aufgefahren, also entsprechend verlängert wird. Das Räumwerkzeug 38 befindet sich ausreichend oberhalb der Werkstückauflage 33, in die ein neues Werkstück 34 eingelegt werden kann. Anschließend beginnt ein neuer Zieh-Räum-Hub.

Zum Druckräumen wird von der bereits geschilderten, in Fig. 1 dargestellten Ausgangsstellung ausgegangen. Durch Druckbeaufschlagung des Hauptantriebes 11 über dessen Druck-Anschlüsse 17 wird der obere Druck-Schlitten 10 nach unten in Richtung auf den Maschinentisch 4 verfahren. Die ausgefahrenen Hilfsantriebe 19 werden hierbei über ihre Druck-Anschlüsse 27 mit Druckmedium beaufschlagt, so daß der untere Zieh-Schlitten in seiner oberen Stellung verbleibt, in der er bzw. der untere Werkzeughalter 35 gegen den Maschinentisch 4 bzw. die Werkstückauflage 33 anliegt. Hierbei wird der Schaft 37 des Räumwerkzeuges 38 durch das auf der Werkstückauflage 33 liegende zu bearbeitende Werkstück 34 hindurchgeschoben, so daß der Schaft 37 in die Schaftaufnahme 36 des Werkzeughalters 35 gelangt, ohne daß der untere Werkzeughalter 35 geschlossen und der obere Werkzeughalter 46 geöffnet wird. Der Schaftkopf 41 liegt auch nicht stirnseitig gegen den Werkzeughalter 35 an, sondern ist in der Schaftaufnahme 36 lediglich radial spielarm geführt. Diese Stellung ist erreicht, wenn der Räumschlitten 50 vollständig geschlossen ist, wenn also die Stirnseiten 30 der Verbindungsstangen 23 gegen die Anschläge 29 des Druck-Schlittens 10 anliegen.

Nunmehr wird der Hauptantrieb 11 weiter über den Druck-Anschluß 17 mit Druckflüssigkeit beaufschlagt, so daß der Räumschlitten 50 nach unten verfahren wird. Die Räumkraft wird hierbei direkt als Druckkraft vom Druck-Schlitten 10 über den Werkzeughalter 46 auf das Räumwerkzeug 38 übertragen. Die Verbindungsstangen 23 und der untere Werkzeughalter 35 sind hierbei prinzipiell kräftefrei. Nach dem Ende des Druck-Räum-Hubes wird der untere Werkzeughalter 35 in Verriegelungsrichtung 51 geschlossen und der obere Werkzeughalter 46 in Entriegelungsrichtung 52 geöffnet, wie es in Fig. 2 für das Zieh-Räumen angedeutet ist. Die Hilfsantriebe 19 werden in Richtung auf ein Ausfahren der Kolbenstange 21 beaufschlagt, d.h. der Räumschlitten 50 wird durch weiteres Verfahren des Zieh-Schlittens 9 nach unten geöffnet, so daß sich das Räumwerkzeug 38 vollständig unterhalb des durch Druck-Räumen bearbeiteten Werkstückes 34 befindet, das aus der Werkstückauflage 33 entnommen werden kann. Anschließend werden die Hilfsantriebe 19 in umgekehrter Richtung angesteuert, so daß das Endstück 43 des Räumwerkzeuges 38 wieder in den oberen Werkzeughalter 46 gelangt. Durch Ansteuerung des Hauptantriebes 11 über den Druck-Anschluß 18 wird der geschlossene Räumschlitten 50 in die obere Stellung verbracht, in der sich der untere Zieh-Schlitten 9 wieder unmittelbar unterhalb des Maschinentisches 4 befindet, wie es in Fig. 1 dargestellt ist. Nachdem der obere Werkzeughalter 46 entsprechend der Verriegelungsrichtung 54 geschlossen und der untere Werkzeughalter 35 entsprechend der Entriegelungsrichtung 53 geöffnet ist, also das Räumwerkzeug 38 wieder mit dem Druck-Schlitten 10 verbunden ist, wird der obere Druck-Schlitten 10 vom Hauptantrieb 11 in die in Fig. 1 dargestellte obere Ausgangsstellung gebracht. Die Hilfsantriebe 19 sorgen hierbei wieder für den bereits geschilderten Längenausgleich, d.h. das Öffnen des Räumschlittens 50. Nach Einlegen eines neuen Werkstückes 34 in die Werkstückauflage 33 kann ein neuer Druck-Räum-Zyklus durchgeführt werden.

Selbstverständlich kann die Innenräummaschine auch so ausgestaltet sein, daß mehrere Räumwerkzeuge 38 gleichzeitig eingesetzt werden. In einem solchen Fall ist der Druck-Schlitten 10 mit einer entsprechenden Zahl von Werkzeughaltern 46, der Maschinentisch 4 mit einer entsprechenden Anzahl von Werkstückauflagen 33 und der Zieh-Schlitten 9 mit einer entsprechenden Zahl von Werkzeughaltern 35 versehen. Wenn in den Ansprüchen bezüglich dieser Teile jeweils von "einem" gesprochen ist, so ist dies nicht als Zahlwort, sondern als unbestimmter Artikel zu verstehen.

## Patentansprüche

1. Innenräummaschine, insbesondere Senkrecht-Innenräummaschine
- mit einem Maschinengestell (7), das an einem Ende eine Kopfplatte (6) aufweist,
- mit einem der Kopfplatte (6) gegenüberliegenden Maschinentisch (4), an dem eine Werkstückauflage (33) für ein zu räumendes Werkstück (34) angebracht ist
- mit am Maschinengestell (7) angebrachten Schlitten-Führungssäulen (8)
- mit einem auf den Führungssäulen (8) verschiebbar geführten, zwischen der Kopfplatte (6) und dem Maschinentisch (4) angeordneten Druck-Schlitten (10)
- mit einem auf den Führungssäulen (8) verschiebbar geführten, auf der dem Druck-Schlitten (10) entgegengesetzten Seite des Maschinentisches (4) angeordneten Zieh-Schlitten (9)
- mit am Zieh-Schlitten (9) fest angebrachten und mit dem Druck-Schlitten (10) abstandsveränderbar verbundenen Verbindungsstangen (23), die den Druck-Schlitten (10) und den Zieh-Schlitten (9) zu einem zu öffnenden und zu schließenden Räumschlitten (50) verbinden,
- mit an den Schlitten (9, 10) angebrachten Werkzeughaltern (35, 46) zum Halten eines Räumwerkzeuges (38), und
- mit einem Räumhauptantrieb (11),
dadurch gekennzeichnet,
- daß an dem Druck-Schlitten (10) einerseits und an den Verbindungsstangen (23) andererseits Längenverstell-Hilfsantriebe (19) befestigt sind,
- daß an der Kopfplatte (6) einerseits und am Druck-Schlitten (10) andererseits der Räum-Hauptantrieb (11) befestigt ist,
- daß die Verbindungsstangen (23) gegen Anschläge (29) am Druck-Schlitten (10) anlegbar sind und
- daß die Werkzeughalter (35, 46) wechselweise verriegelbar und entriegelbar sind.

2. Innenräummaschine nach Anspruch 1, dadurch gekennzeichnet, daß die Anschläge (29) in Richtung der Verbindungsstangen (23) einstellbar sind.

3. Innenräummaschine nach Anspruch 2, dadurch gekennzeichnet, daß die Anschläge (29) an Anschlagbuchsen (31) ausgebildet sind, die am Druck-Schlitten (10) verstellbar gehalten sind.

4. Innenräumaschine nach einem der Ansprüche 1 bis 3, dadurch gekennzeichnet, daß der Werkzeughalter (46) am Druck-Schlitten (10) ein Drucklager (49) für das Räumwerkzeug (38) aufweist.

5. Innenräummaschine nach einem der Ansprüche 1 bis 4, dadurch gekennzeichnet, daß der Hauptantrieb (11) als hydraulisch beaufschlagbarer Kolben-Zylinder-Antrieb, insbesondere als Differentialantrieb, ausgebildet ist.

6. Innenräummaschine nach einem der Ansprüche 1 bis 5, dadurch gekennzeichnet, daß die Hilfsantriebe (19) als hydraulisch beaufschlagbare Kolben-Zylinder-Antriebe ausgebildet sind.

## Claims

1. Internal broaching machine, in particular vertical internal broaching machine, comprising
- a machine frame (7), one end of which is provided with an end plate (6)
- a machine table (4), which is disposed opposite the end plate (6) and on which is mounted a work rest (33) for a workpiece (34) to be broached
- slide guiding columns (8) mounted on the machine frame (7)
- a pushing slide (10) disposed between the end plate (6) and the machine table (4) and displaceably guided on the guiding columns (8)
- a pulling slide (9) disposed on the side, opposite to the pushing slide (10), of the machine table (4) and displaceably guided on the guiding columns (8)
- connecting rods (23), which are tightly fixed to the pulling slide (9) and connected with the pushing slide (10) to be variable in distance and which connect the pushing slide (10) and the pulling slide (9) to form a broaching slide (50) to be opened and to be closed,
- toolholders (35, 46) fixed to the slides (9, 10) for holding a broaching tool (38), and
- a main broaching drive (11),
characterized
- in that length adjusting auxiliary drives (19) are fastened to the pushing slide (10) on the one hand and to the connecting rods (23) on the other hand
- in that the main broaching drive (11) is fastened to the end plate (6) on the one hand and to the pushing slide (10) on the other hand
- in that the connecting rods (23) are engageable with stops (29) on the pushing slide (10), and
- in that the toolholders (35, 46) are alternatingly lockable and unlockable.

2. Internal broaching machine according to claim 1, characterized in that the stops (29) are adjustable in the direction of the connecting rods (23).

3. Internal broaching machine according to claim 2, characterized in that the stops (29) are formed on stop bushes (31) which are adjustably held on the pushing slide (10).

4. Internal broaching machine according to one of claims 1 to 3, characterized in that the toolholder (46) on the pushing slide (10) has a thrust bearing (49) for the broaching tool (38).

5. Internal broaching machine according to one of claims 1 to 4, characterized in that the main drive (11) is a hydraulically actuated piston-cylinder drive, in particular a differential drive.

6. Internal broaching machine according to one of claims 1 to 5, characterized in that the auxiliary drives (19) are hydraulically actuated piston-cylinder drives.

## Revendications

1. Machine à brocher les intérieurs, en particulier machine verticale à brocher les intérieurs, comprenant :
- un bâti (7) de machine dont l'une des extrémités est munie d'une plaque supérieure (6),
- une table (4) de machine qui se trouve en vis-à-vis de la plaque supérieure (6) et sur laquelle se trouve un appui de pièce (33) pour une pièce (34) que l'on veut brocher,
- des colonnes (8) de guidage de chariot montées sur le bâti (7) de la machine,
- un chariot de poussée (10) guidé coulissant sur les colonnes de guidage (8) et disposé entre la plaque supérieure (6) et la table (4) de la machine,
- un chariot de traction (9) guidé coulissant sur les colonnes de guidage (8) et disposé sur le côté de la table (4) opposé au chariot de poussée (10),
- des tiges de liaison (23) qui sont solidarisées au chariot de traction (9) et reliées au chariot de poussée (10) avec un écartement variable et qui relient le chariot de poussée (10) et le chariot de traction (9) pour former un chariot de brochage (50) apte à s'ouvrir et à se fermer,
- des porte-outil (35, 46) disposés sur les chariots (9, 10) pour retenir l'outil de brochage (38), et
- un moyen d'entraînement principal de brochage (11),
caractérisée en ce que
- des moyens d'entraînement auxiliaires de déplacement longitudinal (19) sont fixés, d'une part, au chariot de poussée (10) et, d'autre part, aux tiges de liaison (23),
- le moyen d'entraînement principal de brochage (11) est fixé, d'une part, à la plaque supérieure (6) et, d'autre part, au chariot de poussée (10),
- les tiges de liaison (23) peuvent être appliquées contre des butées (29) du chariot de poussée (10), et
- les porte-outil (35, 46) sont alternativement verrouillables et déverrouillables.

2. Machine à brocher les intérieurs selon la revendication, caractérisée en ce que les butées (29) sont réglables dans la direction des tiges de liaison (23).

3. Machine à brocher les intérieurs selon la revendication 2, caractérisée en ce que les butées (29) sont conçues sous la forme de douilles de butée (31) qui sont maintenues avec une possibilité de réglage sur le chariot de poussée (10).

4. Machine à brocher les intérieurs selon l'une des revendications 1 à 3, caractérisée en ce que le porte-outil (46) du chariot de poussée (10) comporte un palier de poussée (49) pour l'outil de brochage (38).

5. Machine à brocher les intérieurs selon l'une des revendications 1 à 4, caractérisée en ce que le moyen d'entraînement principal (11) est conçu sous la forme d'un moyen d'entraînement à piston-cylindre à sollicitation hydraulique, en particulier d'un moyen d'entraînement différentiel.

6. Machine à brocher les intérieurs selon l'une des revendications 1 à 5, caractérisée en ce que les moyens d'entraînement auxiliaires (19) sont conçus sous la forme de moyens d'entraînements à piston-cylindre à sollicitation hydraulique.
